# EUROPEAN PATENT APPLICATION

(11) **EP 4 682 419 A1**
(43) Date of publication of application: **21.01.2026**
(21) Application number: 24895365.5
(22) Date of filing: 29.03.2024
(51) Int. Cl.: F16L 41/02, G01F 1/84

(54) **FLOW DIVIDER AND CORIOLIS FLOWMETER**

(30) Priority: 28.11.2023 CN 202311595122
(71) Applicant: Walsn Measurement and Control Technology (Hebei) Co., Ltd., Langfang, Hebei 065000 (CN); Walsn Limited, Canterbury, Kent CT2 7FG (GB)
(72) Inventor: WANG, Tao, Langfang, Hebei 065000 (CN); GONG, Jupeng, Langfang, Hebei 065000 (CN); MA, Chunli, Langfang, Hebei 065000 (CN)
(74) Representative: Porta & Consulenti Associati S.p.A.
(86) International application number: PCT/CN2024/084860
(87) International publication number: WO 2025/112253

(57) **Abstract**

Disclosed in the present invention are a flow divider and a Coriolis flowmeter, wherein the flow divider is of a cylindrical structure, N branch flow guide ports are formed in the cylinder bottom of the flow divider, and N is a positive integer not less than 2. The branch flow guide ports are non-circular. The total area of the N branch flow guide ports is S1, and the flow divider satisfies the following conditions: if the N non-circular branch flow guide ports are replaced with N circular branch flow guide ports, and the maximum total area of the N circular branch flow guide ports is S2, S1>S2. Compared with the prior art, the present invention can increase the integral cross sectional area of the N branch flow guide ports of the flow divider, and under the condition of certain pressure, the flow of the flow divider is greatly increased, and the pressure loss is greatly reduced.

## Description

### TECHNICAL FIELD

The present disclosure relates to the technical field of liquid diversion, in particular to a flow divider and a Coriolis flowmeter.

### BACKGROUND

The Coriolis flowmeter is generally provided with a flow divider, and the flow divider is of a cylindrical structure. A plurality of branch diversion ports with the same cross sectional area are formed in a cylindrical bottom of the flow divider. A main diversion port is formed in a cylindrical top of the flow divider. The inside of the flow divider is configured as a diversion channel connecting the main diversion port and the branch diversion ports. In the prior art, the cross sections of the diversion channel, the main diversion port and the branch diversion ports are all circular, and the cross section of the diversion channel is identical to the cross section of the main diversion port. The main diversion port and the branch diversion ports are all configured to connect pipelines with rounded ends. Therefore, it is possible to achieve a flow division or merger of a medium by means of the flow divider.

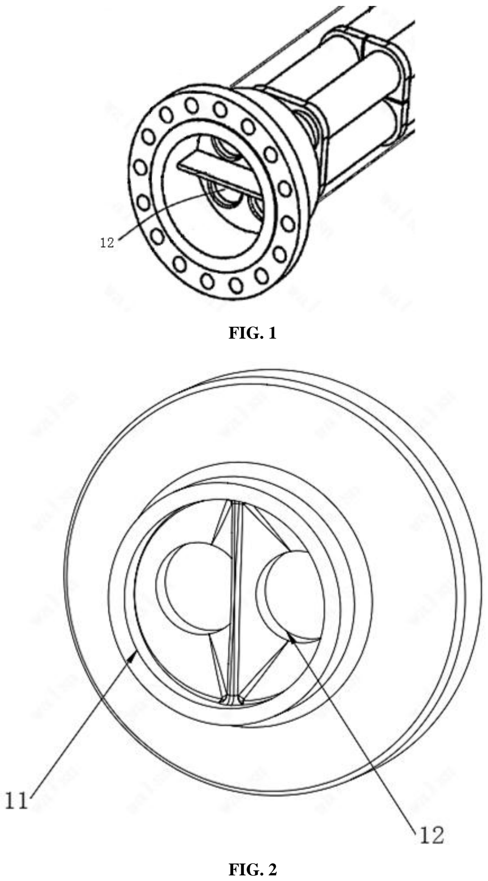

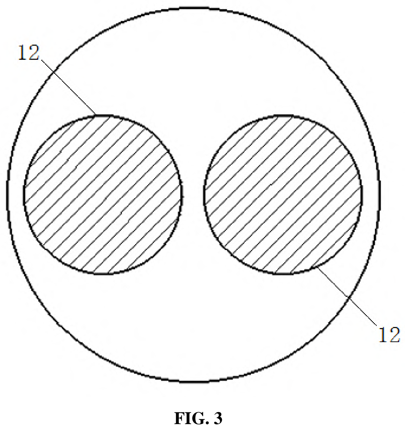

Referring to FIGs. 1-3, since the ends of the flow tubes are circular, and adjacent flow tubes need to be separated by a certain distance, the ratio of total cross sectional area of all branch diversion ports to the cross sectional area of the main diversion port is generally less than 50%, and the cross section of the main diversion port is not effectively utilized, causing that the pressure loss is increased and the flow range is decreased.

### SUMMARY

The present disclosure aims to provide a flow divider and a Coriolis flowmeter to solve the technical problems in the prior art and increase the ratio of the total cross sectional areas of branch diversion ports to the cross sectional area of a main diversion port.

In order to achieve the above-mentioned objective, the present disclosure provides the following scheme.

The present disclosure provides a flow divider and a Coriolis flowmeter. The flow divider is of a cylindrical structure. N branch diversion ports are formed in a cylindrical bottom of the flow divider, and N is a positive integer of not less than 2.

Each of the N branch diversion ports is non-circular. A total area of the N branch diversion ports is defined as S1, and the flow divider is configured to satisfy following conditions: if the N non-circular branch diversion ports are replaced with N circular branch diversion ports, a maximum total area of the N circular branch diversion ports is defined as S2, and S1 is greater than S2.

Preferably, each of two adjacent sides of two adjacent branch diversion ports are in a straight line shape.

Preferably, each of the N branch diversion ports is in a fan shape.

Preferably, a central angle of the fan shape corresponding to each of the N branch diversion ports is 360°/N .

Preferably, each of the N branch diversion ports is in a tetragonum shape.

Preferably, the N branch diversion ports are distributed in a rectangular array.

Preferably, one of two adjacent sides of two adjacent branch diversion ports is provided with a projection, and an other of the two adjacent sides of the two adjacent branch diversion ports is provided with a groove fitting the projection.

Preferably, the N branch diversion ports are in ellipse shapes and are arranged in a row, wherein short axes of the ellipse shapes are collinear.

The present disclosure also provides a Coriolis flowmeter, including a flow divider and N flow tubes. The flow divider is any one of the flow dividers described above. The N branch diversion ports of the flow divider are respectively connected to the N flow tubes. An end, configured to connect with a corresponding one of the N branch diversion ports, of each of the N flow tubes is provided with a connection port fitting the corresponding one of the N branch diversion ports in shape.

Preferably, the flow divider includes a first flow divider and a second flow divider, a first end of each of the N flow tubes is connected to a corresponding one of the branch diversion ports of the first flow divider, and a second end of the each of the N flow tubes is connected to a corresponding one of the branch diversion ports of the second flow divider.

Compared with the prior art, the present disclosure has the following technical effects.

The circular branch diversion ports in the prior art are replaced with non-circular branch diversion ports to increase the total cross sectional area of the branch diversion ports, so that the flow rate of the flow divider is greatly increased and the pressure loss is greatly decreased under a constant pressure.

### BRIEF DESCRIPTION OF THE DRAWINGS

To illustrate the present embodiment of the present disclosure or the technical scheme in the prior art more clearly, the following briefly introduces the accompanying drawings to be used in the present embodiment. Apparently, the accompanying drawings in the following description show merely some embodiments of the present disclosure, and those skilled in the art can still derive other drawings from these accompanying drawings without creative efforts.
FIG. 1 is a structural schematic diagram of a flow divider connected with four flow tubes in the prior art;
FIG. 2 is a structural schematic diagram of another flow divider connected with two flow tubes in the prior art;
FIG. 3 is a distribution schematic diagram of branch diversion ports in FIG. 2;
FIG. 4 is a structural schematic diagram of a flow divider in Example I according to an embodiment of the present disclosure;
FIG. 5 is a distribution schematic diagram of branch diversion ports in FIG. 4;
FIG. 6 is a structural schematic diagram of another flow divider in Example I according to an embodiment of the present disclosure;
FIG. 7 is a schematic diagram of flow tubes corresponding to the flow divider as shown in FIG. 6;
FIG. 8 is a partial enlarged view of section A in FIG. 7;
FIG. 9 is a structural schematic diagram of yet another flow divider in Example I according to an embodiment of the present disclosure;
FIG. 10 is a schematic diagram of flow tubes corresponding to the flow divider as shown in FIG. 9;
FIG. 11 is a partial enlarged drawing of section B in FIG. 10;
FIG. 12 is a distribution schematic diagram of branch diversion ports of a flow divider in Example II according to an embodiment of the present disclosure;
FIG. 13 is a distribution schematic diagram of branch diversion ports of a flow divider in Example III according to an the embodiment of the present disclosure; and
FIG. 14 is a structural schematic diagram of a Coriolis flowmeter according to an embodiment of the present disclosure.

Reference numerals in accompanying drawings: 10 flow divider; 11 main diversion port; 12 branch diversion port; 20 flow tube; and 100 Coriolis flowmeter.

### DETAILED DESCRIPTION OF THE EMBODIMENTS

The following clearly and completely describes the technical scheme in the embodiments of the present disclosure with reference to the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

The present disclosure aims to provide a flow divider and a Coriolis flowmeter to solve the technical problems in the prior art and increase the ratio of the total cross sectional area of branch diversion ports to the cross sectional area of a main diversion port.

To make the foregoing objective, features and advantages of the present disclosure clearer and more comprehensible, the present disclosure is further described in detail below with reference to the accompanying drawings and specific embodiments. In the accompanying drawings, the shaded portions are only used to indicate the positions of the branch diversion ports 12, and are not used to indicate the cutting area.

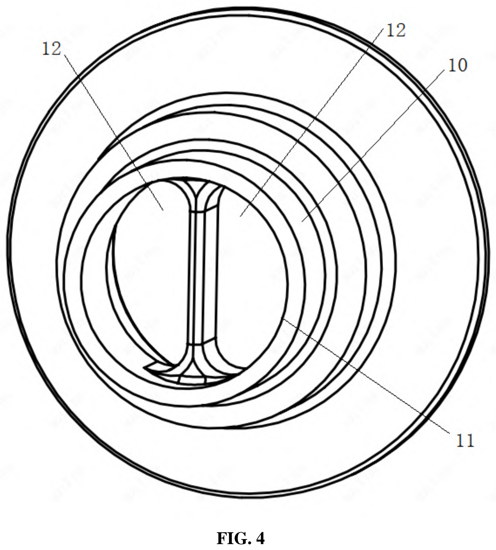

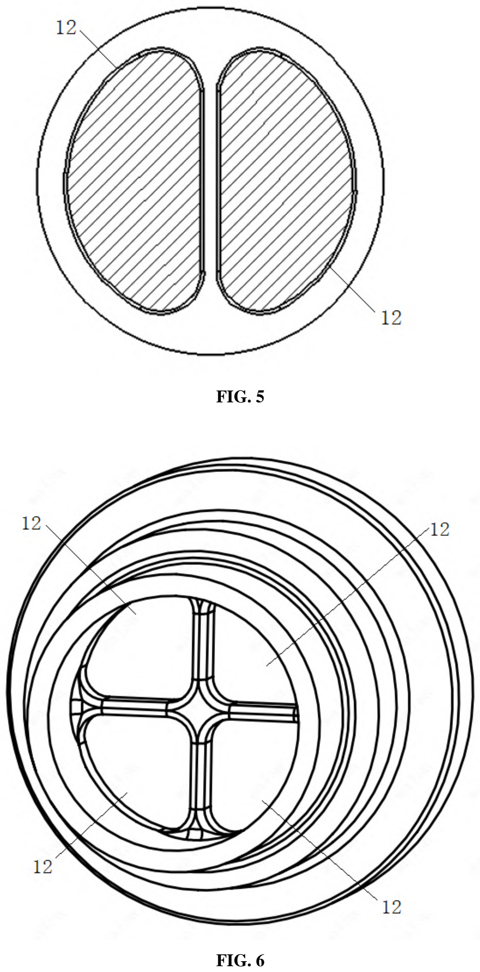

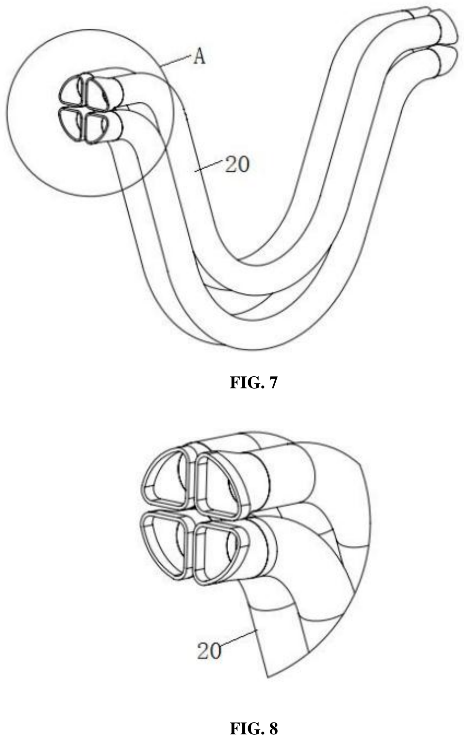

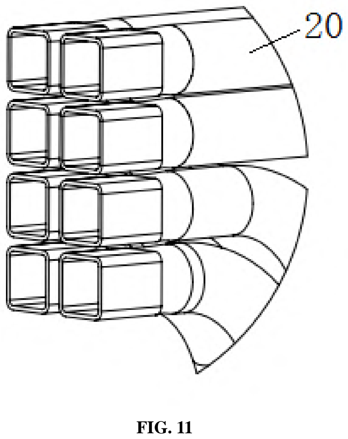

Referring to FIGs. 4-13, the embodiment provides a flow divider 10 being of a cylindrical structure. N branch diversion ports 12 are formed in a cylindrical bottom of the flow divider 10, and N is a positive integer of not less than 2. It will be understood that the cross sectional area of each branch diversion port 12 should be the same to ensure that the flow rate of each branch diversion port 12 is the same or substantially the same.

The branch diversion port 12 is non-circular. The total area of the N branch diversion ports 12 is defined as S1, and the flow divider 10 is configured to satisfy following conditions: if the N non-circular branch diversion ports 12 are replaced with N circular branch diversion ports 12, the maximum total area of the N circular branch diversion ports 12 is defined as S2, and S1 is greater than S2.

The working principle of the flow divider10 in the embodiment is as follows.

It should be noted that two adjacent sides of two adjacent circular branch diversion ports 12 both are outwardly convex arcs, thus there is a gap between the two adjacent sides. In the embodiment, the N circular branch diversion ports 12 are replaced with the N non-circular branch diversion ports 12 to increase the total cross sectional area of the N branch diversion ports 12, so that the flow rate of the flow divider 10 is greatly increased, and the pressure loss is greatly decreased under a constant pressure.

There are various forms of non-circular branch diversion ports 12 which can be selected by those skilled in the art according to actual needs. Hereinafter, three examples will be described, and actual embodiments are not limited thereto.

### Example I

Referring to FIGs. 4-11, two adjacent sides of two adjacent branch diversion ports 12 are shaped as straight lines (that is, the two adjacent branch diversion ports 12 are separated by a straight line separation strip). The two straight lines can be perfectly parallel or slightly inclined (e.g. at an included angle of 5°). Obviously, this shape may re duce the area of a region between two adjacent branch diversion ports 12.

For example, referring to FIGs. 4-6, each branch diversion port 12 may be in a fan shape. The fan shape here can refer to a mathematical sector figure, that is, a figure surrounded by an arc and two radii passing through both ends of the arc. The fan shape here can also refer to a shape of a fan face, that is, a small part, close to the center of the circle, of the sector figure is removed.

A central angle of the fan shape corresponding to each branch diversion port 12 is 360°/N, so that the sum of the central angles corresponding to the N branch diversion ports 12 is 360°. The N branch diversion ports 12 are uniformly distributed in the circumferential direction with the geometric center of the cylinder bottom of the flow divider 10 as the center of the circle, and the two adjacent sides of two adjacent branch diversion ports 12 are completely parallel.

It will be understood that the fan shape in Example I is only used to describe the general shape of the branch diversion port 12. It can be understood that the fan shape provided with arc transitions or chamfers at the corners thereof still belongs to the fan shape referred to in Example I.

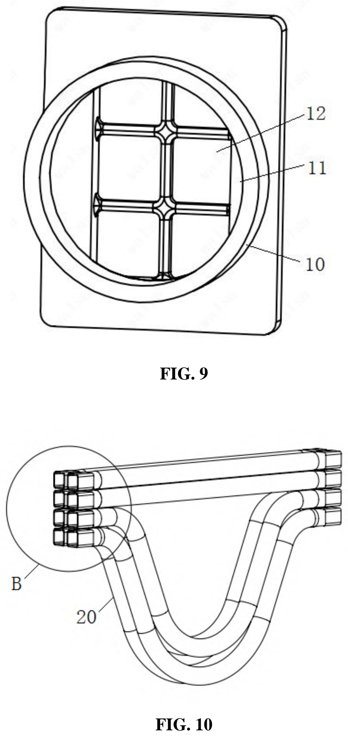

Yet for example, referring to FIG. 9, the branch diversion port 12 may also be in a tetragonum shape. The tetragonum shape here may refer to a square shape or a rectangle shape. The N branch diversion ports 12 are preferably distributed in a rectangular array, that is, the adjacent sides of two adjacent branch diversion ports 12 are parallel to each other.

### Example II

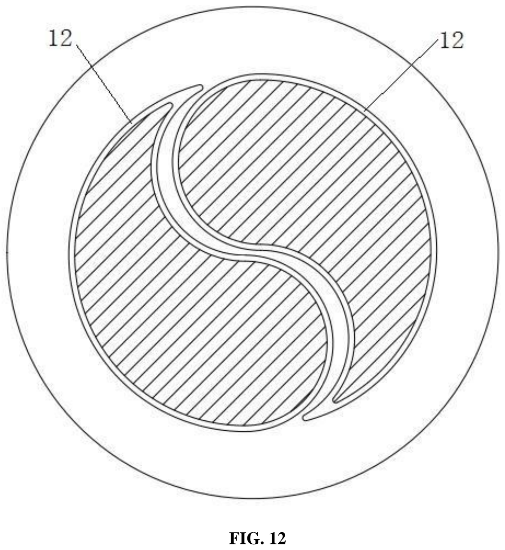

Referring to FIG. 12, one of two adjacent sides of two adjacent branch diversion ports 12 is provided with a projection, and the other of the two adjacent sides of two adjacent branch diversion ports 12 is provided with a groove fitting the projection, that is, the two adjacent branch diversion ports 12 are separated by a curved separation strip. Here, "fitting" refers to positional fitting, that is, the projection at least partially projects into the groove. In Example II, the area of a region between two adjacent branch diversion ports 12 is reduced by fitting the projection with the groove.

It should be noted that both projections and grooves may be provided on each of the two adjacent sides of two adjacent branch diversion ports 12.

### Example III

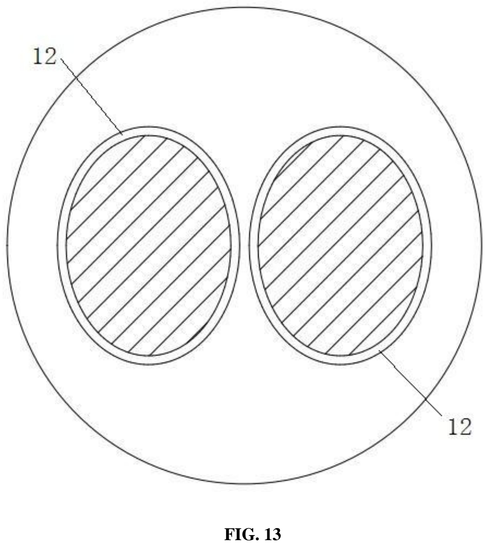

Referring to FIG 13, the branch diversion ports 12 are in the ellipse shapes, and are arranged in a row, where the short axes of the ellipse shapes are collinear. It should be understood that when a short axis of the ellipse is equal to the diameter of a circle, a long axis of the ellipse is greater than the diameter of the circle, and the ellipse is concentric with the circle, the cross sectional area of the ellipse is greater than the cross sectional area of the circle. Therefore, Example III can increase the total cross sectional area of the N branch diversion ports 12 compared with the prior art.

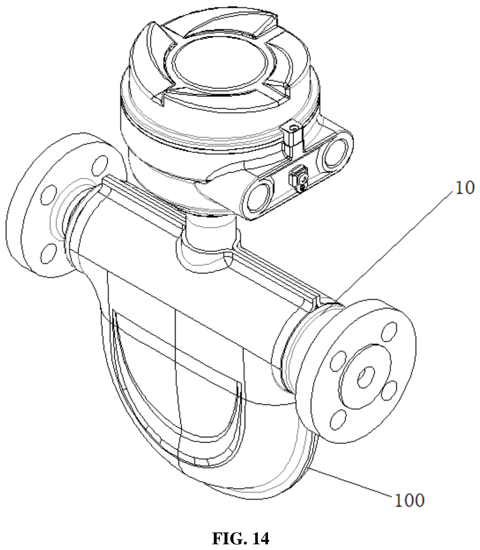

Referring to FIG. 14, the embodiment also provides a Coriolis flowmeter 100, including a flow divider 10 and N flow tubes 20. The flow divider 10 is any one of the above-described flow dividers 10. The N branch diversion ports 12 of the flow divider 10 are respectively connected to the flow tubes 20. An end of the flow tube 20 is provided with a connection port fitting the branch diversion port 12 in shape, where the end here refers to an end, configured to connect with the branch diversion port 12, of the flow tube 20.

The Coriolis flowmeter 100 in the embodiment adopts the above-mentioned flow divider 10, so the Coriolis flowmeter 100 also has the corresponding advantages of the above-mentioned flow dividers 10, which will not be described here.

As an example, the flow divider 10 includes a first flow divider and a second flow divider. A first end of the flow tube 20 is connected to the branch diversion port 12 of the first flow divider, and a second end of the flow tube 20 is connected to the branch diversion port 12 of the second flow divider. A medium in the flow tube 20 flows from the first flow divider to the second flow divider. The first flow divider is configured for dividing the medium into N streams of the medium, and the second flow divider is configured for merging the N streams of the medium into one stream.

Specific examples are used for illustration of the principles and implementation methods of the present disclosure. The description of the above-mentioned embodiments is used to help illustrate the method and the core principles of the present disclosure; and meanwhile, those skilled in the art can make various modifications in terms of specific embodiments and scope of application in accordance with the teachings of the present disclosure. In summary, the contents of this specification should not be understood as the limitation of the present disclosure.

## Claims

1. A flow divider, being of a cylindrical structure, N branch diversion ports being formed in a cylindrical bottom of the flow divider, and N being a positive integer of not less than 2,
wherein each of the N branch diversion ports is non-circular; a total area of the N branch diversion ports is defined as S1, and the flow divider is configured to satisfy following conditions: if the N non-circular branch diversion ports in the cylindrical bottom are replaced with N circular branch diversion ports, a maximum total area of the N circular branch diversion ports is defined as S2, and S1 is greater than S2.

2. The flow divider according to claim 1, wherein each of two adjacent sides of two adjacent branch diversion ports are in a straight line shape.

3. The flow divider according to claim 2, wherein each of the N branch diversion ports is in a fan shape.

4. The flow divider according to claim 3, wherein a central angle of the fan shape corresponding to each of the N branch diversion ports is 360°/N.

5. The flow divider according to claim 2, wherein each of the N branch diversion ports is in a tetragonum shape.

6. The flow divider according to claim 5, wherein the N branch diversion ports are distributed in a rectangular array.

7. The flow divider according to claim 1, wherein one of two adjacent sides of two adjacent branch diversion ports is provided with a projection, and an other of the two adjacent sides of the two adjacent branch diversion ports is provided with a groove fitting the projection.

8. The flow divider according to claim 1, wherein the N branch diversion ports are in ellipse shapes and are arranged in a row, wherein short axes of the ellipse shapes are collinear.

9. A Coriolis flowmeter, comprising a flow divider and N flow tubes, wherein the flow divider is the flow divider according to any one of claims 1 to 8, the N branch diversion ports of the flow divider are respectively connected to the N flow tubes, and an end, configured to connect with a corresponding one of the N branch diversion ports, of each of the N flow tubes is provided with a connection port fitting the corresponding one of the N branch diversion ports in shape.

10. The Coriolis flowmeter according to claim 9, wherein the flow divider comprises a first flow divider and a second flow divider, a first end of each of the N flow tubes is connected to a corresponding one of the branch diversion ports of the first flow divider, and a second end of the each of the N flow tubes is connected to a corresponding one of the branch diversion ports of the second flow divider.
